# EUROPÄISCHE PATENTANMELDUNG

(11) **EP 0 644 412 A2**
(43) Veröffentlichungstag der Anmeldung: **22.03.1995**
(21) Anmeldenummer: 94114246.5
(22) Anmeldetag: 09.09.1994
(51) Int. Cl.: G01N 1/28, G01N 21/35, G01N 1/40

(54) **Verfahren zur Analyse klinisch relevanter Flüssigkeiten und Suspensionen**

(30) Priorität: 17.09.1993 DE 4331596; 30.04.1994 DE 4415253
(71) Anmelder: BOEHRINGER MANNHEIM GMBH, D-68298 Mannheim (DE)
(72) Erfinder: Backhaus, Jürgen, Dr., D-68535 Edingen-Neckarhausen (DE); Böcker, Dirk, Dr. Dr., D-69115 Heidelberg (DE); Mischler, Reinhard, D-67063 Ludwigshafen (DE)

(57) **Zusammenfassung**

Ein Verfahren zur Analyse klinisch relevanter Probe-Flüssigkeiten und -Suspensionen, bei dem Infrarotspektren der eingetrockneten Proben aufgenommen werden und eine Auswertung der Spektren mit einem multivariaten Auswerteverfahren erfolgt. Die zu analysierenden Proben werden von dem Auswerteverfahren Klassen zugeordnet.

Das Auswerteverfahren wird mit Proben bekannter Klassen trainiert, um Parameter des Auswerteverfahrens so anzupassen, daß die Zuordnung von Proben unbekannter Klassifikation zu bekannten Klassen möglich ist.

Vorteilhaft kann die Aufnahme der Infrarotspektren durch eine Transmissionsmessung an einem eingetrockneten Film der Probe erfolgen.

## Beschreibung

Die vorliegende Erfindung betrifft ein Verfahren zur Analyse und Klassifikation klinisch relevanter Flüssigkeiten und Suspensionen durch ein multivariates Ausweiteverfahren mit Klassenzuordnung, wobei die Probe auf einen Träger aufgebracht, ein Infrarotspektrum der eingetrockneten Probe aufgenommen, das Infrarotspektrum mit einem multivariaten Auswerteverfahren ausgewertet und die Probe einer Klasse zugeordnet wird. Die vorliegende Erfindung betrifft ebenfalls Träger zur Durchführung von Transmissionmessungen an Proben.

Im Stand der Technik werden beispielsweise von den Firmen Alfa Laval und Bruker Verfahren beschrieben, bei denen Nahrungsmittel oder Gegenstände des täglichen Bedarfes durch eine Infrarotspektroskopie analysiert und die Ergebnisse einer Diskriminanzanalyse unterworfen werden. In der Art von Probennahme und Probenvorbereitung unterscheiden sich die Verfahren jedoch stark von einem Auswerteverfahren der klinischen Chemie. Die in der Lebensmittelanalytik untersuchten Proben unterscheiden sich außerdem vom Probenmaterial in der klinischen Chemie, insbesondere in Hinsicht auf die typische Schwankungsbreite der zu analysierenden Eigenschaften. Diese ist in der klinischen Chemie in der Regel so niedrig, daß deutlich höhere Anforderungen an die spektroskopische Reproduzierbarkeit gestellt werden müssen Aufgrund der Unterschiedlichkeit des Probenmaterials waren die im Stand der Technik beschriebenen Verfahren nicht auf das Gebiet der Erfindung übertragbar.

Eysel et al. beschreiben ein Verfahren zur Analyse von Kniegelenksflüssigkeiten und weisen auf eine Auswertung der Daten mit modernen statistischen Methoden hin. Bei dem in Applied Spectroscopy 47, Seiten 1519 bis 1521 (1993) beschriebenen Verfahren wurde eine Kniegelenksflüssigkeit in eine Kalziumfluoridmeßzelle eingebracht und ein Infrarotspektrum vermessen. In dieser Publikation wird zudem das IR-Spektrum einer eingetrockneten Kniegelenksflüssigkeit beschrieben. Aus dem Vergleich der Spektren schließen die Autoren anhand einzelner Absorptionsbanden, daß in der wasserhaltigen Kniegelenksflüssigkeit Kohlendioxydclathrate vorliegen. Das Vorliegen dieser Clathrate wird mit dem Auftreten von Arthritis verbunden. Dieses Verfahren beruht darauf, daß durch die Probe hindurchgegangene Strahlung ausgewertet wird. Zu diesem Zweck muß die Probe auf eine Kalziumfluoridscheibe aufgebracht werden. Der hohe Preis von Kalziumfluoridträgern steht jedoch einer Einmalverwendung entgegen. Bei Verwendung der Kalziumfluoridträger sind demnach aufwendige Reinigungsschritte erforderlich. Es hat sich ebenfalls herausgestellt, daß die beschriebene Methode bei komplexer zusammengesetzten Proben wie beispielsweise Blutserum nicht zu ausreichend reproduzierbaren Ergebnissen führt.

Aufgabe der vorliegenden Erfindung war es, ein Verfahren zur Verfügung zu stellen, mit dem Probeflüssigkeiten bzw. -suspensionen sicher und zuverlässig klinisch relevanten Klassen zugeordnet werden können. Es sollte ein Verfahren gefunden werden, das eine hohe Reproduzierbarkeit besitzt und die Analyse auch von komplexen Körperflüssigkeiten sowie Zell- und Bakteriensuspensionen auf einfachem und preisgünstigem Wege ermöglicht.

Es war weiterhin Aufgabe der Erfindung, eine Methode zur Analyse von Probenflüssigkeiten bzw. -suspensionen zur Verfügung zu stellen, die ohne den Zusatz von Reagenzien eine Klassifizierung ermöglicht. Insbesondere war es Aufgabe der Erfindung, die Analyse und Klassifizierung dieser Proben zu vereinfachen.

Es wurde ein Verfahren zur Analyse klinisch relevanter Flüssigkeiten und Suspensionen gefunden, das die Schritte beinhaltet
- Messung von Infrarotspektren einer Mehrzahl von Proben, die bekannten Klassen angehören,
- Durchführung eines multivariaten Auswerteverfahrens unter Minimierung von Zuordnungsfehlern der Proben zu den bekannten Klassen,
- Speichern der durch die Minimierung gewonnenen Parameter des multivariaten Auswerteverfahrens,
- Zur Verfügungstellung einer Probe der Flüssigkeit bzw. Suspension,
- Aufgabe der Probe auf einen Träger,
- Eintrocknung der Probe,
- Bestrahlung der Probe mit Infrarotstrahlung,
- Aufzeichnung eines Infrarotspektrums der Probe,
- Analyse des Infrarotspektrums durch ein multivariates Auswerteverfahren,
- Ausgabe der Zuordnung der Probe zu einer Klasse des multivariaten Auswerteverfahrens.

Erfindungsgemäße Verfahren befassen sich mit der Analyse von Körperflüssigkeiten, Zell- und Bakteriensuspensionen. Klinisch relevante Körperflüssigkeiten, die mit diesem Verfahren ausgewertet werden können, sind z. B. Blut, Plasma, Serum, Hämolysat, Urin, Liquor, Speichel, Transpirationsflüssigkeit, Augenflüssigkeit, Zystenflüssigkeit, Fruchtwasser, Sputum, Ascitis, Sperma. Unter Zell- und Bakteriensuspensionen sind solche Proben zu verstehen, die entweder direkt (z. B. durch Punktion, Abstrich etc.) oder durch Anzucht in einem Nährmedium gewonnen werden.

Insbesondere ist ein erfindungsgemäßes Verfahren geeignet, Flüssigkeiten mit einer Vielzahl verschiedener Inhaltsstoffe zu analysieren. Dies gilt besonders für Blut, Plasma, Serum und Hämolysat.

Hiermit wird in dieser Patentanmeldung vollinhaltlich auf die deutsche Patentanmeldung P 43 31596.8 Bezug genommen.

Die Durchführung des erfindungsgemäßen Verfahrens beginnt mit einem Zurverfügungstellen der zu klassifizierenden Probeflüssigkeit bzw. -suspension. Dies kann in ausreichend bekannter Weise z. B. durch die Entnahme einer Blut- oder Urinprobe erfolgen. Für einige Arten von Proben ist es vorteilhaft, wenn vor der Durchführung des Verfahrens eine Aufarbeitung erfolgt. Vollblut kann beispielsweise zentrifugiert werden, um Serum und Blutkuchen voneinander zu trennen.

Die gewonnene Probe wird auf einen Träger aufgegeben, der es ermöglicht, ein Infrarotspektrum aufzunehmen. Ein solcher Träger kann beispielsweise ein metallisierter Objektträger sein. Bevorzugt sind solche Träger, die auf ihrer Oberfläche reflektierend sind und eine Rauhigkeit besitzen, die eine diffuse Streuung von Infrarotstrahlung bewirkt. Ebenfalls können solche Träger verwendet werden, die auf ihrer Oberfläche, auf die die Probe aufgebracht wird, verspiegelt sind. Eine Beschichtung der Träger kann mit Metallen, vorzugsweise Edelmetallen wie Gold, Platin, Palladium aber auch z. B. mit unedlen Metallen, vorzugsweise Aluminium und Chrom erfolgen. Diese Beschichtungen besitzen den Vorteil, daß sie weitgehend inert gegenüber der Probe und auch gegenüber der Umgebungsluft sind. Die Träger können eine ebene Oberfläche besitzen, auf welche die Probe aufgegeben wird. Erfindungsgemäß bevorzugt sind jedoch solche Träger, die eine Vertiefung zur Aufnahme der Probenflüssigkeit besitzen.

Messungen in diffuser Reflektion besitzen den Vorteil, daß Inhomogenitäten des Probenmaterials, z. B. Trübungen, die Auswertung nicht stören, sondern sogar die diffuse Reflektion unterstützen.

Gegenüber diesen zur Reflektionsmessung geeigneten Trägern können auch Träger zur Transmissionsmessung vorteilhaft verwendet werden, welche die eingestrahlte Strahlung hindurchlassen. Eine Unterscheidung erfolgt hier wiederum zwischen Trägern mit glatter und mit rauher Oberfläche. Die genannten Träger können zum Beispiel aus Kunststoffen, wie Polycarbonat, Polyethylen oder Polymethylmethacrylat, bestehen, die für Infrarotstrahlung in weiten Wellenzahlbereichen durchlässig sind. Diese Träger für die Transmissionsmessung können analog denen für die Reflektionsmessung Vertiefungen für die Probenflüssigkeit besitzen.

Bei einer besonders bevorzugten Ausführungsform des Trägers besitzt dieser ein oder mehrere Öffnungen, in welche die Probenflüssigkeit appliziert werden kann. Geeignete Ausführungsformen der Träger mit Öffnungen sind beispielsweise Ösen, Netze und perforierte Folien. Die Probe wird über der Öffnung so auf die Träger aufgegeben, daß sie ausspreitet. Bei geeignetem Querschnitt der Öffnungen bildet die Probenflüssigkeit zunächst einen freitragenden Tropfen aus, der die Öffnung des Probeträgers verschließt. Nach dem Trocknen bildet sich ein dünner freitragender Film aus. Besonders geeignete Öffnungsdurchmesser liegen im Bereich von 200 bis 1000 µm. Die Stabilität der Filme kann gegebenenfalls durch den Zusatz sogenannter Filmbildner erhöht werden. Filmbildner sind beispielsweise Proteine, Acrylate und oberflächenaktive Substanzen. Probenflüssigkeiten mit relativ hohem Proteingehalt, wie z. B. Vollblut, Serum und Plasma, bilden bei den genannten Öffnungsquerschnitten in der Regel Filme ohne Zusatz von Filmbildnern aus.

Das Eintrocknen der Probeflüssigkeit kann analog zu dem Eintrocknen von Proben auf reflektierenden Trägern erfolgen. Öffnungsquerschnitt des Trägers und gegebenenfalls der Zusatz von Filmbildnern muß so auf die Probenflüssigkeit abgestimmt werden, daß der Flüssigkeitsfilm, der in der Öffnung des Trägers aufgespannt ist, beim Trocknen nicht reißt.

Zur Aufnahme eines Infrarotspektrums wird der getrocknete Film möglichst senkrecht zu seiner Oberfläche bestrahlt, so daß sich kein Trägermaterial im Strahlengang befindet. Da in der Praxis stets Probenmaterial an Wandungen des Trägers haftet, entzieht sich ein Teil der Probenflüssigkeit der Auswertung. Um diesen Anteil möglichst gering zu halten, kann das Trägermaterial so gewählt werden, daß es möglichst geringe Flächen bietet, an denen Flüssigkeiten haften. Perforierte Folien können beispielsweise möglichst dünn gewählt werden, so daß die der Öffnung zugewandte Kante möglichst klein ist. Eine weitere Möglichkeit, die Adhäsion von Probenflüssigkeiten zu verringern, besteht darin, hydrophobe Trägermaterialien einzusetzen. Beispielsweise kann eine perforierte Folie aus Teflon®, Polyethylen oder Polypropylen gefertigt sein. Besonders günstig sind Metallfolien oder Metallverbundfolien, die auf beiden Seiten mit einem hydrophoben Material, beispielsweise den oben genannten Kunststoffen, beschichtet sind. Bei Verwendung von Metallösen können diese vor ihrem Einsatz z. B. mit Teflonspray flüssigkeitsabweisend beschichtet werden. Geeignete Träger sind in dem Patent US-5,290,705 beschrieben, auf das hiermit vollinhaltlich Bezug genommen wird.

Da bei der Transmissionsmessung an freitragenden Filmen nur ein Teil des Probenmaterials bestrahlt wird, ist eine integrale Auswertung analog dem bevorzugten Verfahren in P 43 31 596.8 mit reflektierenden Trägern nicht möglich. Für eine quantitative oder semiquantitative Auswertung ist es daher vorteilhaft, eine Referenzsubstanz in das Probenmaterial zu mischen. Ist die Menge an Referenzsubstanz und die Menge an Probenmaterial vor der Mischung bekannt, so kann die Konzentration der Referenzsubstanz in der Mischung berechnet werden. Mit dem Infrarotspektrum wird dann aufgrund der Absorption der Referenzsubstanz auf die Menge an Probenmaterial zurückgeschlossen. Auf diese Weise ist eine Konzentrationsbestimmung von Substanzen in der Probe durchführbar.

Bei einer ebenfalls vorteilhaften Methode zur quantitativen Messung wird die Dicke des Filmes interferometrisch bestimmt. Die vom Infrarotstrahl durchsetzte Fläche des Filmes ist aufgrund des Strahlenganges bekannt. Aus der Dicke und der bestrahlten Fläche kann auf die Menge des Probenmaterials rückgeschlossen werden das zur Auswertung gelangt. Damit ist eine Quantifizierung der Substanzen in der Probe möglich.

Ein wesentliches Charakteristikum der vorliegenden Erfindung ist es, daß die Probe auf dem Träger eingetrocknet wird. Durch diese Vorgehensweise wird es möglich, das stark störende Spektrum von Wasser weitgehend zu eleminieren. Überraschenderweise hat sich herausgestellt, daß diese Eintrocknung in der Regel zu keiner Beeinträchtigung der Probe führt, die eine Analyse und Klassifikation unmöglich macht. Die Eintrocknung ist hingegen ein wichtiger Schritt, um die benötigte hohe Reproduzierbarkeit bei der Spektrenaufzeichnung zu erhalten.

Die Eintrocknung der Probe kann durch einfaches Verdampfen der Flüssigkeit bei Raumtemperatur oder aber auch unter besonderen Bedingungen, beispielsweise durch Anlegen eines Vakuums Erwärmung der Probe oder Aufbewahrung in Gegenwart eines Trockenmittels, erfolgen. Mit Eintrocknung ist erfindungsgemäß keine hunderprozentige Trocknung der Probe gemeint, sondern eine Trocknung, die wenige Prozent Restfeuchte hinterläßt. Diese Vorgehensweise hat den Vorteil, daß die Probe einen zusammenhängenden Film bildet, der keine Risse ausbildet die eine Auswertung beeinträchtigen könnten.

Beim Eintrocknen der Probe entstellt abhängig von den Trockenbedingungen, Träger und der Art der Probe ein Trocknungsrest von variierender Gestalt. Bei Eintrocknung von Serumproben auf geschlossenen Oberflächen bildet sich in der Regel ein kreisförmiger Wulst, dessen Dicke in Richtung auf das Kreiszentrum abnimmt. Bei freitragenden Filmen bildet sich in den Randzonen zum Trägermaterial ebenfalls ein Wulst, der zur Mitte der Öffnung in einen relativ gleichmäßig dicken Film übergeht.

Die Bestrahlung der Probe in Reflexion erfolgt bevorzugt so, daß die gesamte Probe von dem IR-Strahlenbündel erfaßt wird. Aufgrund dieser integralen Bestrahlung der Probe ist die Messung weitestgehend unabhängig von dem Trocknungsprofil der Probe. Dies ist ein weiterer, wesentlicher Faktor, der die Reproduzierbarkeit der Spektrenauswertung erhöht.

Zur Aufnahme eines Infrarotspektrums wird die Probe mit Infrarotstrahlung beleuchtet. Die Infrarotstrahlung kann den gesamten Infrarotbereich, d. h. etwa 400 bis 15.000 Wellenzahlen überstreichen. Besonders vorteilhaft in Zusammenhang mit der vorgenannten Trocknungsmethode ist die IR-Spektroskopie im Bereich von 400 bis 4.000 Wellenzahlen, da sie eine hohe Spezifität besitzt.

Die durch die Probe hindurchgetretene oder von der Probe reflektierte Strahlung wird durch einen Detektor aufgefangen. Aus Intensitätsgründen wird man bestrebt sein, einen möglichst großen Teil der Strahlung aufzufangen. Im Stand der Technik sind infrarotsensitive Detektoren, wie z. B. Bolometer, Thermoelemente, photovoltaische Elemente und Halbleiterdetektoren bekannt. Bevor die Strahlung in den Detektor gelangt, kann sie durch ein System aus Linsen, Blenden und Spiegeln geleitet werden.

Die Aufnahme von Infrarotspektren ist aus dem Stand der Technik hinlänglich bekannt. Bezüglich der Aufnahme von IR-Spektren eingetrockneter Proben sei hier auf die deutsche Patentanmeldung P 43 31596.8 verwiesen.

Bei den üblichen Verfahren der Spektrenauswertung wird in Abhängigkeit von der eingestrahlten Wellenlänge die transmittierte oder reflektierte Strahlung in Abhängigkeit von der Wellenlänge aufgezeichnet. Erfindungsgemäß wird ein solches Spektrum durch ein Auswerteverfahren mit Klassenzuordnung ausgewertet. Für diesen Auswerteprozeß muß das Spektrum zunächst digitalisiert werden, sofern es nicht bereits digital aufgezeichnet wurde. Dies bedeutet, daß das Spektrum in eine Wertetabelle umgesetzt wird, die für diskrete Wellenzahlen die Absorption oder Transmission enthält. Die Zahl der Wertepaare richtet sich im wesentlichen nach der Kapazität der vorhandenen Soft- bzw. Hardware. Erfindungsgemäß ist es nicht notwendig, aus dem Spektrum einzelne Banden zu analysieren und getrennt auszuwerten. Es hat sich für einige Analysen jedoch als vorteilhaft erwiesen wenn die Wertetabelle, die zur Auswertung kommt auf bestimmte Bereiche der Wellenzahlen beschränkt wird. Auf diese Weise kann eine Auswahl relevanter Bereiche der Spektren erfolgen und Spektrenteile, die von geringem Informationsgehalt sind, können eleminiert werden.

Das digitalisierte Spektrum wird einem multivariaten Auswerteverfahren, das als Computerprogramm zur Verfügung steht, übergeben.

Multivariate Auswerteverfahren sind im Sinne der Erfindung Diskriminanzanalysen, regularisierte Diskriminanzanalysen, neuronale Netze, Clusteranalysen usw. Genannte Softwarepakete können beispielsweise von den Firmen STSC, STAT SOFT, SAS und Galactic Industries bezogen werden.

Die multivariaten Auswerteverfahren müssen vor ihrer erfindungsgemäßen Anwendung auf das Anwendungsgebiet trainiert werden. Dies erfolgt in der Regel durch eine Zahl von Trainingsläufen, bei denen Infrarotspektren einer Mehrzahl von Proben bekannter Klassifikationen in das Auswerteverfahren eingegeben werden. Ebenfalls wird die Art der Klassifikation der einzelnen Proben dem Auswerteverfahren mitgeteilt. Bei dem genannten Trainingslauf wählt der Auswertealgorithmus selbsttätig Parameter, die eine sichere Zuordnung der Proben zu den vorgegebenen Klassen sicherstellen. Die auf diese Weise gewonnenen Parameter dienen bei späteren Läufen zur Klassifikation unbekannter Proben. Wird eine Probe unbekannter Klassifikation, wie bereits beschrieben, ausgewertet und einer Klasse zugeordnet, so teilt das Auswerteverfahren über eine Ausgabeeinheit dem Benutzer mit, welche Klassifikation vorgenommen wurde.

Ein besonders wichtiges Anwendungsgebiet des beschriebenen Klassifikationsverfahrens liegt in der Zuordnung von Körperflüssigkeitsproben zu klinisch relevanten Gruppen. Ebenfalls kann das Klassifikationsverfahren vorteilhaft auf Proben von Zell- und Bakteriensuspensionen angewandt werden.

Ein multivariates Auswerteverfahren besitzt in der Regel eine Vielzahl von verschiedenen Klassen. Es kann daher mit erfindungsgemäßem Verfahren eine Einordnung der Probe erfolgen, die mit bisherigen Methoden eine Vielzahl separater Analyseprozesse benötigte. Klassen, die in den Bereich der inneren Krankheiten fallen, sind für die klinische Analyse besonders wichtig. Beispielsweise ist mit erfindungsgemäßen Verfahren eine Klassifikation möglich, die es erlaubt, vorauszusagen, ob eine Leber- oder Nierenkrankheit vorliegt. Die beschriebene Klassifikation ist jedoch nicht mit einer eindeutigen Diagnose gleichzusetzen, da gleiche spektrale Veränderungen der Probe unter Umständen durch verschiedene Krankheiten oder Störungen hervorgerufen werden können. Die genannte Klassifikation stellt vielmehr ein Screeningverfahren dar, mit dem entschieden werden kann, auf welche Krankheiten die Probe mit klassischen Verfahren geprüft werden soll. Dies resultiert in einer Einsparung einer Vielzahl von analytischen Tests, die normalerweise, z. B. bei einer Eingangskontrolle in Kliniklabors, notwendig wären.

Zur Erfindung gehört weiterhin eine Vorrichtung zur Klassifizierung von Proben mit
- einem Probenträger,
- einer Infrarotstrahlungsquelle zur Bestrahlung einer Probe auf dem Probenträger,
- einem Detektor zur Detektion von der Probe reflektierter oder von durch die Probe hindurchgetretener Strahlung,
- einer Speichereinheit, in der Ausgangssignale des Detektors in Form eines Spektrums gespeichert werden,
- einer Auswerteeinheit, die mit dem Spektrum der Probe ein multivariates Auswerteverfahren durchführt und die Probe durch Vergleich mit Spektren von Referenzproben bekannter Klassifikation einer Klasse zugeordnet.
- einer Anzeigeeinheit, welche die Zuordnung einer zu analysierenden Probe zu einer Klasse graphisch oder alphanumerisch darstellt.

Die Vorrichtung zur Klassifizierung von Proben beinhaltet einen Probenträger, auf den die zu untersuchende Probe aufgegeben wird. Ein erfindungsgemäßer Probenträger muß, da die Eintrocknung der Probe auf ihm geschieht, gegenüber der Probe resistent sein. Vorteilhaft können besonders solche Probenträger eingesetzt werden, die auf ihrer Oberfläche eine Vertiefung besitzen, in die die Probe gegeben werden kann. Über Probenträger mit einer diffus reflektierenden Oberfläche hinaus können auch solche mit einer spiegelnd reflektierenden Oberfläche eingesetzt werden. Während im Fall der diffus reflektierenden Träger in erster Linie diffus reflektierte Strahlung ausgewertet wird und spiegelnd reflektierte Strahlung ausgeblendet wird, kommt im Anwendungsfall der spiegelnd reflektierenden Probenträger auch die direkt reflektierte Strahlung zur Auswertung.

Anordnungen zur Auswertung diffuser oder direkter Reflektion sind im Stand der Technik bekannt und werden an dieser Stelle nicht näher erläutert. Eine Anordnung, die zur Auswertung diffus reflektierter Strahlung dient, ist in der deutschen Patentanmeldung P 43 31596.8 detaillierter dargestellt.

Zur Aufnahmes eines Infrarotspektrums wird die Probe auf dem Probenträger mit Infrarotstrahlung beleuchtet. Infrarotstrahlung in den bereits beschriebenen Wellenzahlbereichen kann mit im Markt befindlichen IR-Spektrometern von beispielsweise Nicolet, Bruker und Perkin Elmer erzeugt werden.

Die Aufnahme eines Spektrums kann nach zwei prinzipiell unterschiedlichen Verfahren erfolgen. Bei dem ersten Verfahren wird aus der kontinuierlichen Strahlung der Strahlungsquelle ein sehr kleiner Wellenzahlbereich herausgefiltert und mit diesem die Probe bestrahlt. Bei dem zweiten Prinzip wird die Probe mit einem kontinuierlichen Spektrum bestrahlt und das von der Probe reflektierte oder durch die Probe hindurchgegangene Licht wellenzahlabhängig analysiert. Zur Aufnahme von Infrarotspektren hat sich mittlerweile die Fouriertransform-Spektroskopie durchgesetzt. Gitter- oder Prismensysteme sind auch gebräuchlich, jedoch heutzutage bereits von untergeordneter Bedeutung.

Das nach einem der Prinzipien gemessene, transmittierte oder reflektierte Licht wird in Abhängigkeit von seiner Wellenzahl in einem herkömmlichen Speicherelement, z. B. einem RAM, gespeichert.

Das Transmissions- oder Reflektionsspektrum der Probe kann vor einer Auswertung noch einer Vielzahl von Veränderungen unterworfen werden. Ist die Anwesenheit von Verunreinigungen oder Störsubstanzen in der Probe bekannt, so kann deren Spektrum vom aufgenommenen Spektrum substrahiert werden. In Abhängigkeit von dem verwendeten Instrument können weiterhin Anpassungen durchgeführt werden, die wellenzahlabhängige Empfindlichkeitsunterschiede des Instrumentes kompensieren. Eine Vielzahl der Veränderungen, denen ein Spektrum unterworfen werden kann, sind in der europäischen Patentanmeldung EP-A-0 584 931 beschrieben.

Ein zentraler Aspekt der Erfindung ist es, daß das von der Probe erhaltene Spektrum durch ein multivariates Ausweiteverfahren ausgewertet wird. Multivariate Auswerteverfahren beruhen darauf, daß sie mit Proben bekannter Klassifikationen trainiert werden. Dies bedeutet, daß zunächst für eine Vielzahl von Proben Infrarotspektren nach identischen oder zumindest vergleichbaren Meßverfahren aufgenommen werden. Diese Spektren werden dem multivariaten Auswerteverfahren zugeführt und dem Auswerteverfahren weiterhin mitgeteilt, zu welcher Klasse das jeweilige Spektrum gehört. Bei einer Vielzahl von Answerteverfahren (Diskriminanzanalyse, Clusteranalyse) wird zunächst eine Korrelationsmatrix aufgestellt. Aufgrund der Korrelationsmatrix ermittelt das Ausweiteverfahren welche Wellenlängen mit welchem Einfluß zur Klassifizierung verwendet werden sollen. Die zur Auswertung herangezogenen Wellenlängen spannen einen Raum auf, der in seiner Dimension mit der Zahl der Wellenlängen übereinstimmt. Von dem Auswerteverfahren wird ein Unterraum gewählt, in dem die Zuordnung von Proben zu den Klassen möglichst eindeutig erfolgt. Die Zuordnung von Proben zu einer Klasse ergibt sich aus ihrer räumlichen Nähe in dem genannten Unterraum.

Die Zuordnung einer unbekannten Probe zu einer Klasse kann beispielsweise auf einem Display dargestellt oder auf Papier ausgedruckt werden. In vielen Fällen ist die graphische Darstellung einer rein numerischen Zuordnung vorzuziehen, da dies dein Betrachter besser ermöglicht, zu beurteilen, wie eindeutig eine Probe einer bestimmten Klasse zugeordnet wurde.

Die Erfindung besitzt gegenüber dem Stand der Technik den Vorteil, daß eine genauere und reproduzierbare Klassifizierung von Körperflüssigkeiten möglich ist. Durch die Erfindung werden weiterhin komplexe Körperflüssigkeiten der Analyse und Klassifizierung zugänglich. Ein weiterer Vorteil liegt darin, daß in einer erfindungsgemäßen Apparatur relativ kostengünstige Probenträger verwendet werden können. Die einmalige Benutzung von Probenträgern ist von Vorteil, da sie Verschleppungsprobleme vermeidet und eine hygienische Analyse ermöglicht. Ein Vorteil der Erfindung liegt ebenfalls darin, daß zur Analyse nur wenige Mikroliter Probe notwendig sind.

Das erfindungsgemäße Verfahren wird anhand der folgenden Beispiele und Figuren näher spezifiziert.
- Figur 1:: Apparatur zur Klassifikation klinisch relevanter Flüssigkeiten und Suspensionen
- Figur 2:: Flußdiagramm zur Klassifikation
- Figur 3:: Spektren von Serumproben
- Figur 4:: Ergebnis einer Diskriminanzanalyse der Spektren aus Figur 3
- Figur 5:: Auswahl von Wellenlängenbereichen für eine Diskriminanzanalyse
- Figur 6:: Ergebnis einer Diskriminanzanalyse der Serumproben von Diabetikern
- Figur 7:: Transmissionsspektrum, aufgenommen an einem freitragenden Film
- Figur 8:: Methodenvergleich
- Figur 9:: Klassifikation von Bakteriensuspensionen

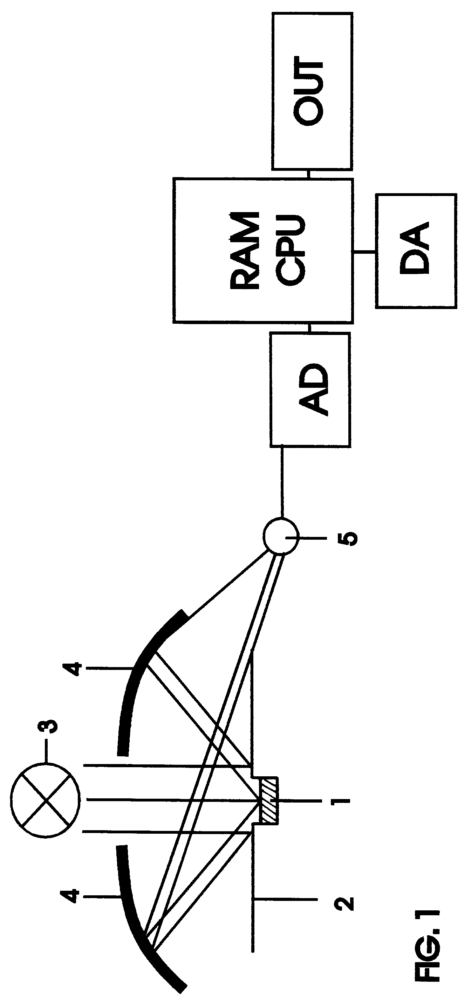

Figur 1 zeigt eine Prinzipskizze einer erfindungsgemäßen Apparatur zur Klassifikation klinisch relevanter Flüssigkeiten und Suspensionen.

Die eingetrocknete Probe (1) befindet sich in der Vertiefung eines Probenträgers (2). Der Probenträger besteht aus einer Messingplatte, die an ihrer Oberfläche mit Gold beschichtet ist. Von der Strahlungsquelle (3) ausgehende Strahlung tritt durch eine Apertur im Hohlspiegel (4) hindurch und gelangt auf die Probe (1). Der Strahlungskegel beleuchtet die Probe in ihrer Gesamtheit. Von der Probe (1) und vom Probenträger (2) diffus reflektierte Strahlung wird mit dem Hohlspiegel (4) aufgefangen und auf den Detektor (5) fokussiert. Die analogen Signale des Detektors werden mit einem analog/digital-Konverter (A/D) in digitale Signale umgewandelt, die in einen Mikroprozessor (CPU) mit angeschlossener Speichereinheit (RAM) gelangen. Ein Algorithmus für eine Diskriminanzanalyse (DA) befindet sich entweder auf einem separaten Informationsträger, z. B. einer Festplatte, Diskette oder im internen Speicher (RAM). Aufgenommene Spektren werden mit der Diskriminanzanalyse ausgewertet und die Ergebnisse mit einem Ausgabemedium (OUT), z. B. einem Bildschirm oder Plotter, dargestellt.

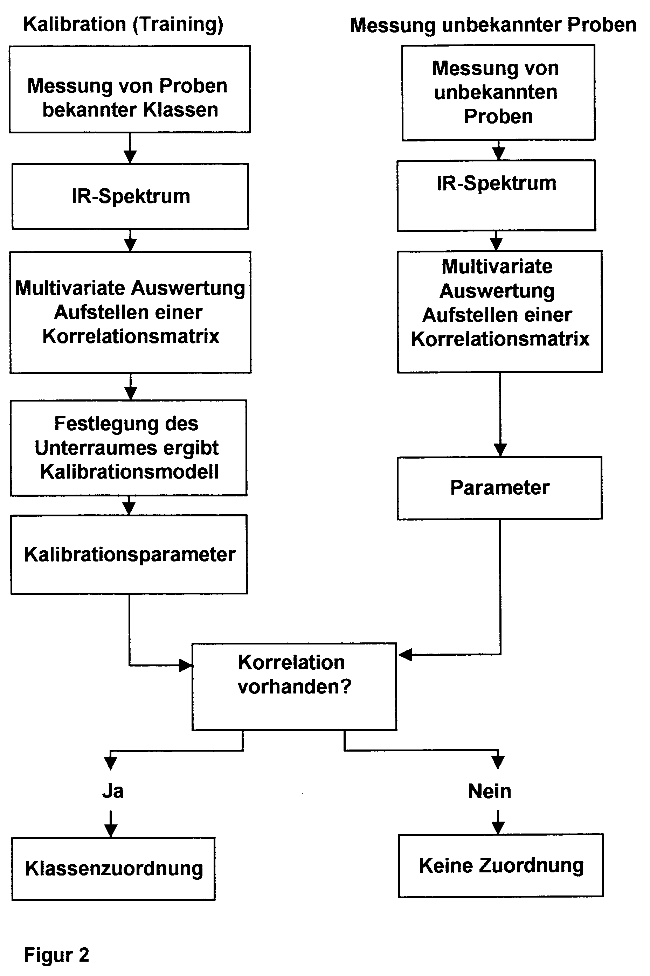

Figur 2 zeigt ein Flußdiagramm, das den Zusammenhang der Kalibration des Auswerteverfahrens und der Analyse unbekannter Proben darstellt. Zur Kalibration werden zunächst Infrarotspektren von Proben bekannter Klassen aufgezeichnet. Mit diesen wird ein Kalibrationsmodell erstellt, was bedeutet, daß Parameter für das Auswerteverfahren gewählt werden, die Proben richtig zuordnen. Bei der Analyse unbekannter Proben werden deren Infrarotspektren unter Zugrundelegung der gewählten Parameter ausgewertet und falls möglich den bekannten Klassen des Auswerteverfahrens zugeordnet.

### Beispiel 1:

Zuordnung von Proben zu den Klassen: "Niereninsuffizienz", "Normal", "Leberzirrhose".

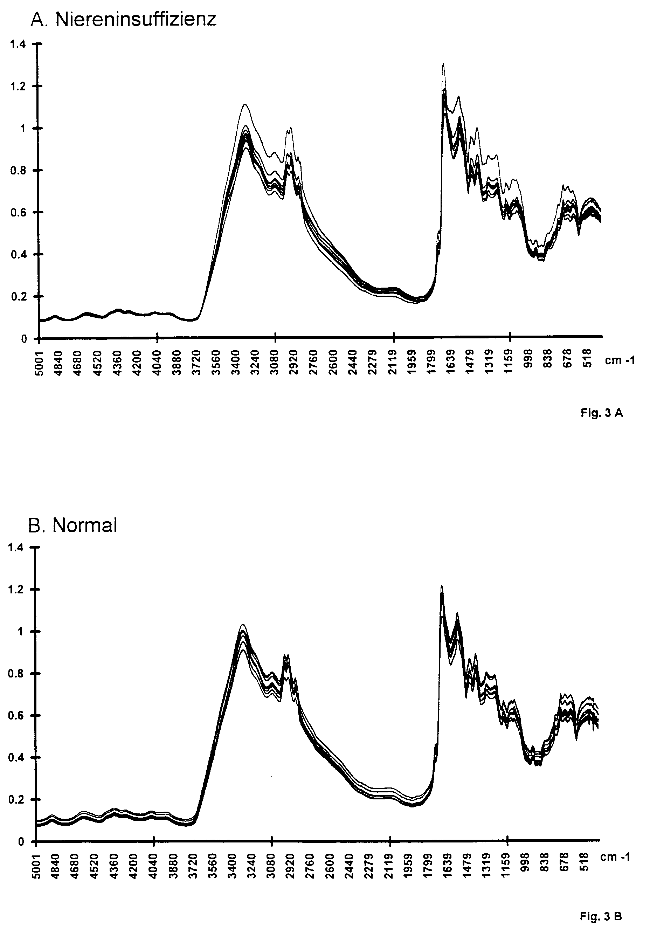

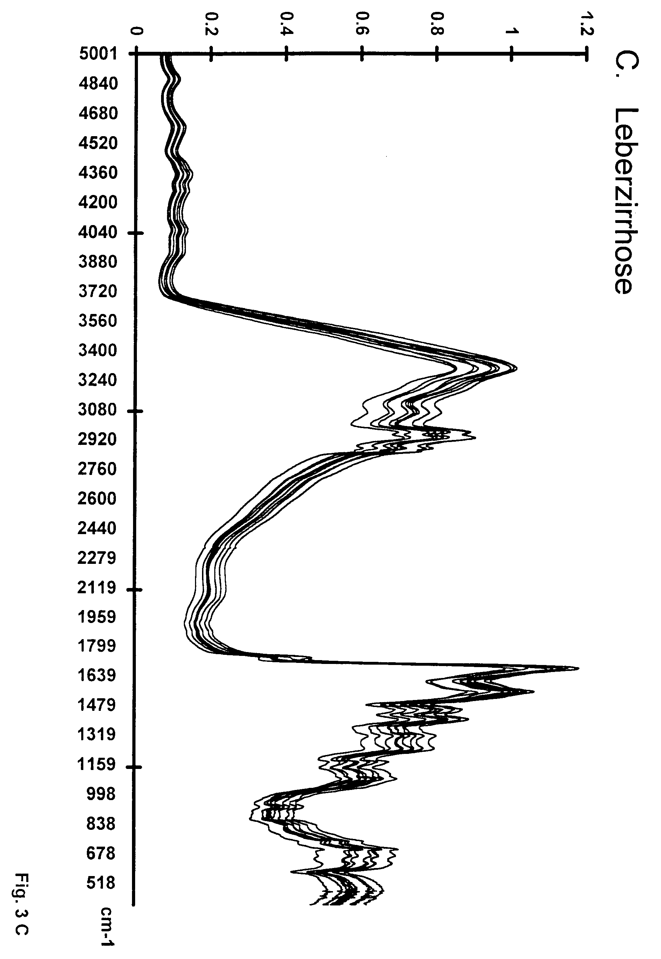

Figur 3 zeigt in den Abbildungen a, b und c Spektren von Proben im Bereich von 400 bis 5.000 Wellenzahlen. Die Spektren wurden gewonnen, indem 1 bis 2 µl Serum auf Probenträger aufgegeben wurden, die eine goldbeschichtete Oberfläche mit einer Rauhigkeit von weniger als 1 µm besitzen. Die Proben wurden unter Raumbedingungen aufbewahrt, was innerhalb von etwa 20 Minuten zu einer Eintrocknung der Proben führte. Reflektionsspektren der Proben wurden mit einem Infrarotspektrometer der Firma Bruker integral vermessen. Integrale Messung bedeutet in diesem Zusammenhang, daß die auf dem Träger befindliche Probe vollständig von der Meßstrahlung erfaßt wird.

Mit dem bloßen Auge können Unterschiede der Spektren in den Abbildungen a, b und c kaum gefunden werden. Durch eine Hauptkomponentenanalyse oder eine Faktoranalyse konnten die Proben nicht ausreichend klassifiziert werden. Mit dem Verfahren der regularisierten Diskriminanzanalyse war hingegen eine Zuordnung zu Klassen eindeutig möglich. Es wurde ein Diskriminanzanalysealgorithmus gemäß J.H. Friedman in "Journal of the American Statistical Association, Vol. 84, No. 405 (1989), Theory and Methods" Seiten 165-175 verwendet. Ein entsprechender FORTRAN-Quellcode kann auf Anfrage von J.H. Friedmann bezogen werden. Ein Trainieren des Diskriminanzanalyseverfahrens fand statt indem die jeweilige Probenklasse dem Algorithmus mitgeteilt wurde.

Eine Validierung des Verfahrens wurde nach der "leave one out"-Methode durchgeführt. Bei dieser Vorgehensweise wird für einen Satz von N Analyseproben ein Trainieren des Diskriminanzanalyseverfahrens mit N-1 Proben vorgenommen und geprüft, ob die N-te Probe in die richtige Klasse eingeordnet wird. Der Vorgang wird in der Regel zyklisch mit allen Proben wiederholt.

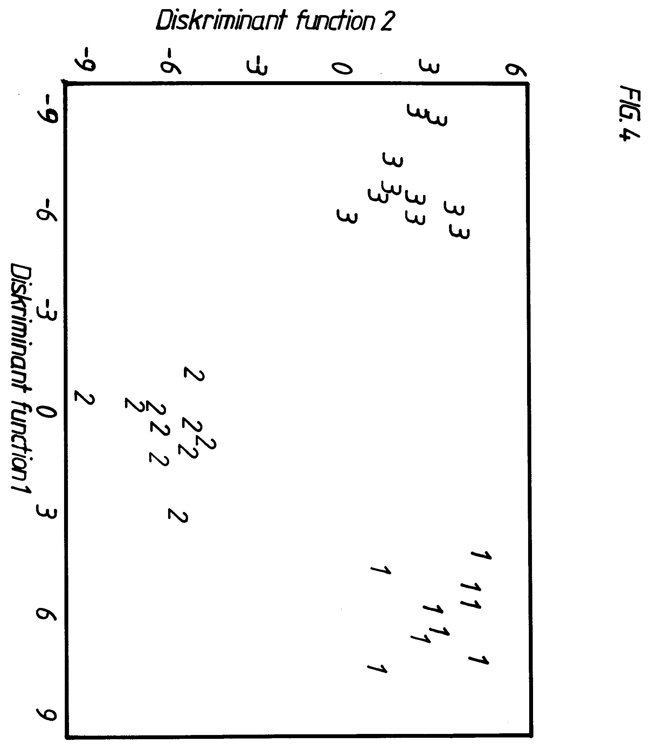

Figur 4 zeigt eine zweidimensionale Darstellung der Ergebnisse dieser Diskriminanzanalyse. Die in Figur 3 dargestellten Spektren wurden der Diskriminanzanalyse zugeführt, indem für jedes Spektrum 23 Wertepaare von Wellenzahlen und Intensitäten gespeichert wurden. Die Reduzierung der Spektren auf 23 Wertepaare erfolgte, indem äquidistant alle 100 Wellenzahlen ein Wertepaar verwendet wurde. In Figur 4 ist deutlich zu sehen, daß Proben gleicher Klasse (Klasse 1: Niereninsuffizienz, Klasse 2: Normalproben, Klasse 3: Leberzirrhose) im gleichen Bereich der zweidimensionalen Darstellung zu finden sind. Dies bedeutet, daß auch eine Probe unbekannter Klassifikation mit der Diskriminanzanalyse eindeutig Klassen zugeordnet werden könnte.

### Beispiel 2:

Zuordnung von Proben zu den Klassen Typ I oder Typ II-Diabetes.

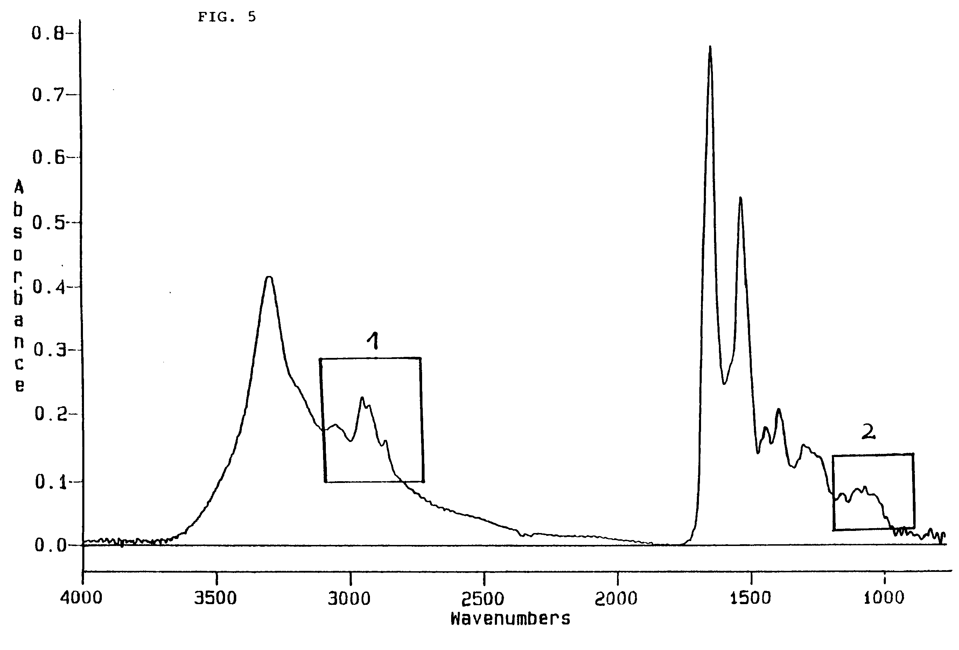

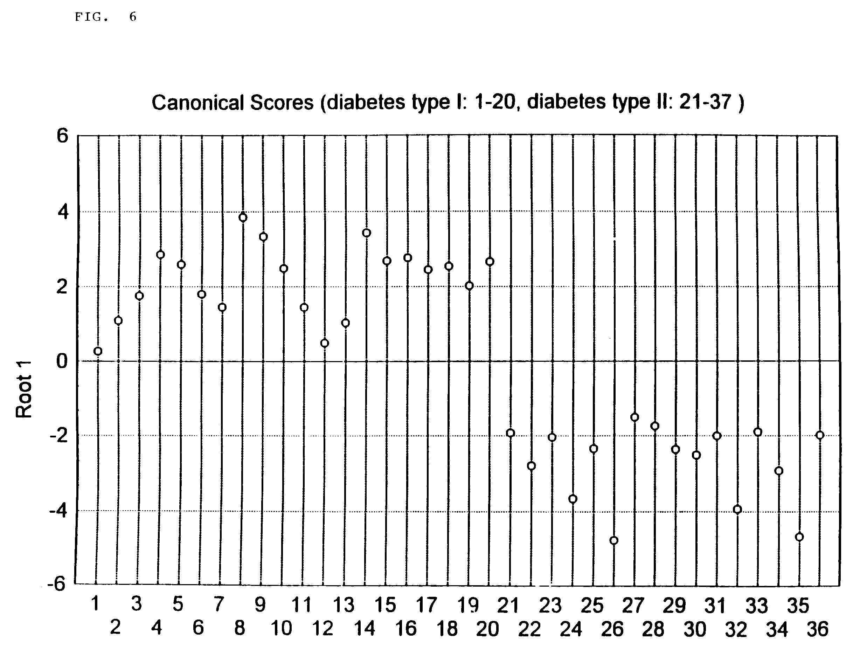

36 Serumproben von Patienten mit Typ I- oder Typ II-Diabetes wurden entnommen und jeweils etwa 2 Mikroliter auf einen goldbeschichteten Probeträger mit rauher Oberfläche gegeben. Nach dem Eintrocknen der Serumproben unter Normalraumbedingungen wurden Reflektionsspektren mit einem Infrarotspektralanalysator der Firma Bruker aufgenommen. Die Spektren wurden einer Datenreduktion unterzogen, indem die Spektralbereiche 1 und 2 wie in Figur 5 dargestellt ausgewählt wurden. In den Bereichen 1 und 2 wurden Weitepaare von Wellenzahl und Intensität im Abstand von 4 cm⁻¹ aufgenommen und einer Diskriminanzanalyse zugeführt. Figur 6 zeigt eine zweidimensionale Darstellung der Ergebnisse einer Diskriminanzanalyse. Auf der X-Achse ist die Numerierung der Proben angegeben, wobei die Proben 1 bis 20 von Diabetikern des Typs I stammen und Proben 21 bis 36 zu solchen des Typus II. Es ist zu erkennen, daß eine deutliche Trennung der beiden Krankheitstypen in Richtung der Y-Achse vorliegt. Während sich Proben von Diabetikern des Typus I im Bereich zwischen 0 und + 4 befinden, weisen solche von Diabetikern des Typus II Y-Werte zwischen - 1 und - 5 auf.

### Beispiel 3:

### Transmissionsspektrum mit Proben auf einem Kunststoffnetz

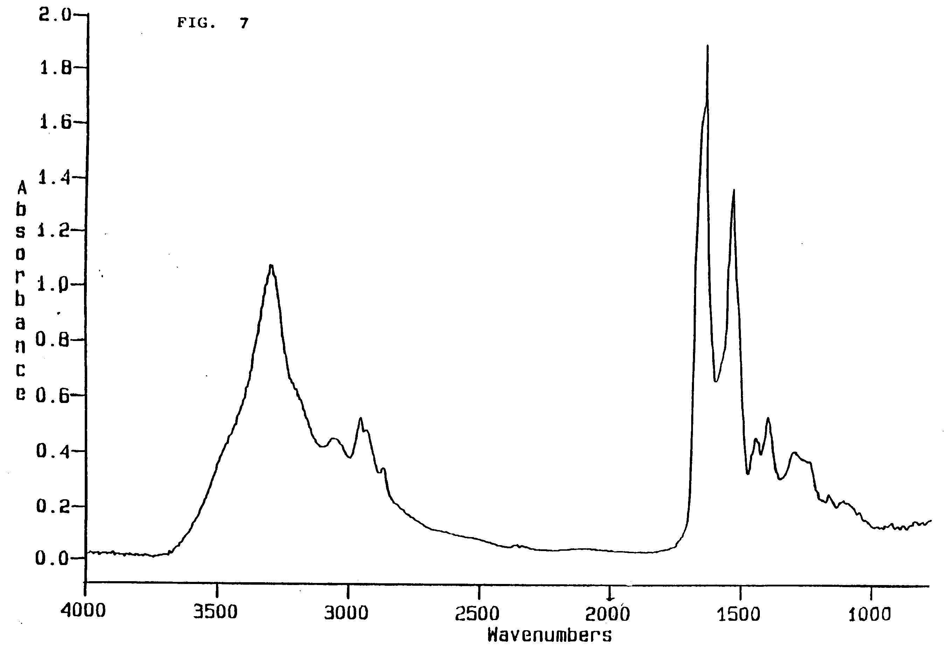

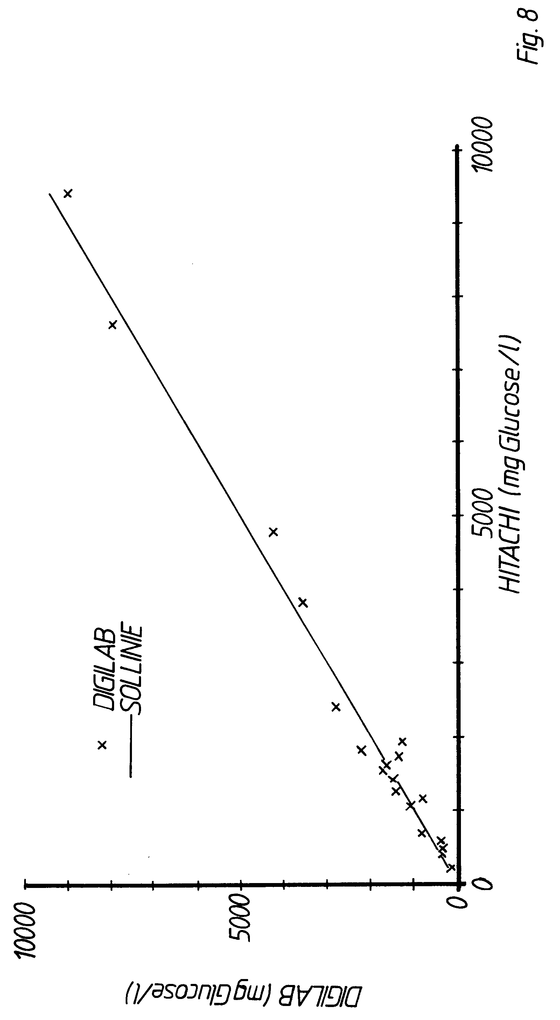

3 µl Proteinlösung wurden in die Masche eines gewebten Kunststoffnetzes (Fluortex, Hersteller: Schweizer Seidengazefabrik AG Thal) mit einem Maschendurchmesser von 850 µm so pipettiert, daß der Tropfen freischwebend alle Ränder einer Netzmasche benetzte. Nach dem Eintrocknen wird der transparente Film mit einem IR-Mikroskop der Firma Digilab in Transmission vermessen. Figur 7 zeigt das aufgenommene Transmissionsspektrum. Figur 8 enthält die zugehörige Kalibration für Glucose in 5 %iger Rinderserumalbumin-Lösung (RSA). Auf der Abszisse sind die Bezugsmessungen mit dein Gerät Hitachi 704 abgetragen, während die Ordinate die zugehörigen Ergebnisse mit dem Gerät Digilab aufgrund einer partial least squares Auswertung darstellt.

### Beispiel 4:

### Klassifikation von Bakteriensuspensionen

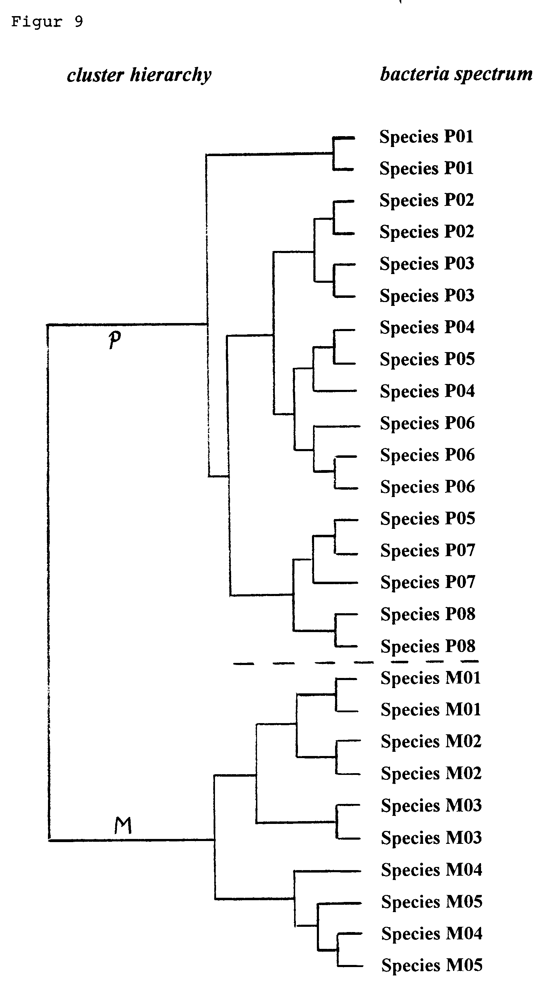

Figur 9 zeigt eine Klassifikation von Proben mit verschiedenen Spezies der Bakterienarten Pseudomonas und Mikrokokken. Die Klassifikation wurde erhalten, indem 2 µl Bakteriensuspension, enthaltend 10⁶ bis 10⁷ Bakterien, auf einen goldbeschichteten Träger mit einer Rauhigkeit von weniger als 1 µm aufgegeben wurde. Nach dein Eintrocknen der Probe unter Normalraumbedingungen wurden Infrarotspektren im Bereich von 800 bis 1200 Wellenzahlen aufgenommen. Von jeder der Proben wurden randomisiert mindestens zwei Spektren aufgenommen.

Mittels Clusteranalyse konnten Proben der beiden Bakterienarten eindeutig voneinander unterschieden werden. Dies ist in der Figur daran zu erkennen, daß keine Zuordnung zwischen P-Spezies (Pseudomonas) und M-Spezies (Mikrokokken) erfolgt ist. Die gestrichelte Linie in Figur 9 zeigt, daß die Trennung von P- und M-Species bereits auf einer sehr einfachen Stufe der Clusteranalyse möglich ist. Außerdem wurde gezeigt, daß nahezu alle Doppelbestimmungen einander korrekt zugeordnet wurden.

Dies ist ein Hinweis dafür, daß erfindungsgemäßes Verfahren auch noch Bakterienspezies derselben Art, jedoch mit anderer Vorgeschichte, zu unterscheiden vermag.

### Bezugszeichenliste

- (1): Probe
- (2): Probenträger
- (3): Strahlungsquelle
- (4): Hohlspiegel
- (5): Detektor
- (A/D): analog/digital-Wandler
- (CPU): Mikroprozessor
- (RAM): Speichereinheit
- (DA): Diskriminanzanalyse
- (OUT): Ausgabemedium

## Patentansprüche

1. Verfahren zur Analyse klinisch relevanter Flüssigkeiten und Suspensionen beinhaltend die Schritte
a) Messung von Infrarotspektren einer Mehrzahl von Proben, die bekannten Klassen angehören,
b) Durchführung eines multivariaten Auswerteverfahrens unter Minimierung von Zuordnungsfehlern der Proben zu den bekannten Klassen,
c) Speichern der durch die Minimierung gewonnenen Parameter des multivariaten Auswerteverfahrens,
d) Zur Verfügungstellen einer Probe der Flüssigkeit bzw. Suspension,
e) Aufgabe der Probe auf einen Träger,
f) Eintrocknung der Probe,
g) Bestrahlung der Probe mit Infrarotstrahlung,
h) Aufzeichnung eines Infrarotspektrums der Probe,
i) Analyse des Infrarotspektrums durch ein multivariates Auswerteverfahren,
j) Ausgabe der Zuordnung der Probe zu einer Klasse des multivariaten Auswerteverfahrens.

2. Verfahren gemäß Anspruch 1, bei dem ein Träger verwendet wird, der Infrarotstrahlung reflektiert, und Aufzeichnung eines Reflexionsspektrums, bevorzugt eines diffusen Reflexionsspektrums der Probe.

3. Verfahren gemäß Anspruch 1 oder 2, bei dem Körperflüssigkeiten aus der Gruppe, die Vollblut, Hämolysat, Serum und Plasma umfaßt, der Analyse unterzogen werden.

4. Verfahren gemäß Anspruch 1 oder 2, bei dem Zell- oder Bakteriensuspensionen der Analyse unterzogen werden.

5. Verfahren gemäß Anspruch 2, bei dem in Schritt g) die gesamte eingetrocknete Probe von Infrarotstrahlung erfaßt wird.

6. Verfahren gemäß Anspruch 1 oder 2, bei dein die Schritte a), b) und c) ein oder wenige Male durchgeführt werden, die Schritte d) bis j) jedoch vielfach und zyklisch mit verschiedenen Proben durchgeführt werden.

7. Verfahren zur Analyse klinisch relevanter Flüssigkeiten und Suspensionen beinhaltend die Schritte
a) Zur Verfügungstellung einer Probe der Flüssigkeit bzw. Suspension,
b) Aufgabe der Probe auf einen Träger, der eine oder mehrere Öffnungen besitzt, in denen die Probe einen freitragenden Film ausbildet,
c) Eintrocknung der Probe,
d) Durchstrahlung der eingetrockneten Probe, die sich in einer Öffnung befindet, mit Infrarotstrahlung,
e) Detektion von Strahlung, die durch die eingetrocknete Probe transmittiert wurde, zur Aufnahme eines Infrarotspektrums,
f) Auswertung des Infrarotspektrums zur Konzentrationsbestimmung eines oder mehrerer Analyten in der Probe und/oder zur Klassifikation der Probe.

8. Verfahren gemäß Anspruch 7, bei dein die eine oder die mehreren Öffnungen einen Öffnungsdurchmesser von 200 bis 1000 µm besitzen.

9. Verfahren gemäß Anspruch 7, bei dem der Träger eine Öse, ein Netz oder eine perforierte Folie ist.

10. Verfahren gemäß Anspruch 7, bei dem eine definierte Menge einer Referenzsubstanz der Probe zugegeben wird und aus der Absorption der Referenzsubstanz die Menge des vom Infrarotstrahl erfaßten Probenmaterials ermittelt wird.

11. Verfahren gemäß Anspruch 7, bei dem die Dicke des freitragenden Filmes interferometrisch bestimmt wird und die Dicke des Filmes zur Ermittlung der vom Infrarotstrahl erfaßten Probenmengen verwendet wird.

12. Verfahren gemäß Anspruch 7, bei dem filmbildende Stoffe der Probeflüssigkeit zugesetzt werden, welche die Stabilität eines freitragenden Filmes vergrößern.

13. Verfahren gemäß Anspruch 7, bei dein das in Schritt e) gewonnene Infrarotspektrum durch ein multivariates Auswerteverfahren analysiert wird.

14. Verfahren gemäß Anspruch 1, 2 oder 13, bei dein als multivariate Statistik eine Diskriminanzanalyse, insbesondere eine regularisierte Diskriminanzanalyse, ein neuronales Netz oder eine Clusteranalyse verwendet wird.

15. Verfahren gemäß Anspruch 1, 2 oder 7, bei dem Infrarotspektren im Bereich von 400 bis 15000 cm⁻¹ bevorzugt 400 bis 4000 cm⁻¹ aufgenommen werden.

16. Verfahren gemäß Anspruch 1 oder 2, bei dem als Proben bekannter Klassifikationen solche Proben verwendet werden, von denen bekannt ist, daß eine innere Krankheit vorliegt.

17. Verfahren gemäß Anspruch 1 oder 2, bei dem als Proben bekannter Klassifikation solche verwendet werden, von denen bekannt ist, daß eine Leber- oder Nierenkrankheit vorliegt.

18. Verfahren gemäß Anspruch 1 oder 2, bei dem als Proben bekannter Klassifikationen solche verwendet werden, die von Patienten mit Typ I- oder Typ II-Diabetes stammen.

19. Verfahren gemäß den Ansprüchen 1 oder 2, bei dem zusätzlich eine oder mehrere Proben verwendet werden, die von gesunden Patienten stammen.

20. Verfahren gemäß Anspruch 7, bei dem als Probe Zell- oder Bakteriensuspensionen verwendet werden.

21. Vorrichtung zur Klassifizierung von Proben mit
- einem Probenträger
- einer Infrarotstrahlungsquelle zur Bestrahlung einer Probe auf dem Probenträger
- einem Detektor zur Detektion von der Probe reflektierter oder von durch die Probe hindurchgetretener Strahlung,
- einer Speichereinheit, in der Ausgangssignale des Detektors in Form eines Spektrums gespeichert werden,
- einer Auswerteeinheit, die mit dem Spektrum der Probe ein multivariates Auswerteverfahren durchführt und die Probe durch Vergleich mit Spektren von Referenzproben bekannter Klassifikation einer Klasse zugeordnet,
- einer Anzeigeeinheit, welche die Zuordnung einer zu analysierenden Probe zu einer Klasse graphisch oder alphanumerisch darstellt.

22. Vorrichtung gemäß Anspruch 21, bei dem der Probenträger eine diffus reflektierende Oberfläche besitzt.

23. Vorrichtung gemäß Anspruch 21, bei dem der Probenträger eine oder mehrere Öffnungen besitzt.

24. Vorrichtung gemäß Anspruch 23 mit einem Probenträger, bei dem die eine oder die mehreren Öffnungen des Probenträgers einen Öffnungsdurchmesser von 200 bis 1000 µm besitzen.

25. Vorrichtung gemäß Anspruch 21, bei dem der Probenträger eine Öse, ein Netz oder eine perforierte Folie ist.
